# FASCICULE DE BREVET EUROPEEN

(11) **EP 0 462 849 B1**
(45) Date de publication et mention de la délivrance du brevet: **19.01.1994**
(21) Numéro de dépôt: 91401251.3
(22) Date de dépôt: 15.05.1991
(51) Int. Cl.: B60T 13/57

(54) **Servomoteur d'assistance à dépression**
Unterdruckbremskraftverstärker
Vacuum brake booster

(30) Priorité: 20.06.1990 FR 9007695
(43) Date de publication de la demande: 27.12.1991
(73) Titulaire: ALLIEDSIGNAL EUROPE SERVICES TECHNIQUES, 93700 Drancy (FR)
(72) Inventeur: Gautier, Jean-Pierre, Bendix Europe Services Techn, F-93700 Drancy (FR); Verbo, Ulysse, Bendix Europe Services Techniques, F-93700 Drancy (FR)
(74) Mandataire: Bentz, Jean-Paul

(56) Documents cités:
- DE-A- 1 902 673
- DE-A- 3 836 609
- FR-A- 2 030 741

## Description

L'invention concerne les servomoteurs d'assistance au freinage du type à dépression et, plus particulièrement, un servomoteur dont on peut régler la valeur du saut.

Dans ce qui suit, on appelle avant la direction orientée vers la gauche des dessins, c'est à dire vers l'avant du véhicule sur lequel est monté un tel servomoteur.

Un servomoteur d'assistance du type à dépression, comporte une enveloppe à l'intérieur de laquelle se trouve un piston qui, à l'aide d'une membrane, définit une chambre avant reliée en permanence à une source de dépression et une chambre arrière, reliée à ladite source de dépression au repos, un moyen de valve établissant entre les deux chambres une différence de pression lors de l'actionnement d'une tige de commande susceptible de s'appuyer, par l'intermédiaire d'un plongeur, sur l'une des faces d'un disque de réaction solidaire d'une tige de poussée destinée à actionner un maître-cylindre.

Un jeu est déterminé au repos entre la partie centrale de l'autre face du disque et le plongeur. Ce jeu permet au plongeur de se déplacer immédiatement vers l'avant pour commander les moyens d'assistance et assurer une réponse immédiate des freins lorsque le conducteur du véhicule commence à actionner la pédale de frein.

La transmission à la tige de poussée, au travers du disque de réaction, de la force d'assistance exercée sur le piston a pour effet de comprimer axialement la partie périphérique du disque de réaction proportionnellement à la force d'assistance. Cette compression de la partie périphérique du disque de réaction a pour conséquence une déformation de la partie centrale de ce disque vers la face avant du plongeur. Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier transmet à la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, et qui augmente avec cet effort.

Un tel servomoteur est décrit dans EP-A-0 340 059.

Il ressort de l'explication qui précède que la réaction à la pédale ne commence à apparaître que lorsque la force d'assistance engendrée par l'actionnement de la pédale de frein dépasse un certain seuil. Ce seuil est appelé le "saut" du servomoteur. Il constitue une caractéristique importante du servomoteur. En effet, si l'existence du saut est imposée pour une réponse immédiate des freins lors d'un actionnement de la pédale, les constructeurs de véhicules automobiles souhaitent généralement que la valeur de ce saut reste dans certaines limites pour que l'assistance n'atteigne pas une valeur trop grande sans augmentation de la réaction sur la pédale.

Cependant, compte tenu notamment des tolérances de fabrication des différentes pièces constituant le servomoteur, il peut exister des différences importantes dans la valeur du saut d'un servomoteur à un autre. De plus, il n'existe actuellement aucun moyen rapide et pratique pour maîtriser ou régler la valeur du saut du servomoteur, de sorte que les exigences précédemment mentionnées ne sont pas toujours satisfaites, sauf à effectuer des contrôles complexes et onéreux.

En pratique, cette lacune concerne les servomoteurs du type identifié dans le préambule de la revendication principale et dont un exemple est donné dans le document DE-A-1 902 673.

Dans ce contexte, la présente invention a pour objet un servomoteur de ce type dont la valeur de saut soit réglable de façon unitaire, c'est-à-dire de manière telle que cette valeur puisse être réglée, pour chaque servomoteur, indépendamment de celle d'un autre servomoteur, de façon simple et sans augmentation sensible du coût du servomoteur ainsi réglé.

Dans ce but, l'invention prévoit de rendre réglable la position du plongeur en début d'assistance, et par voie de conséquence le jeu existant à ce moment entre le disque de réaction et la face avant du plongeur, et, par là même, la valeur du saut.

Le moyen de valve comprend un premier clapet destiné à venir en appui sur un premier siège de clapet solidaire du piston déterminant au repos une communication entre les chambres avant et arrière, un deuxième clapet en appui au repos sur un deuxième siège de clapet solidaire du plongeur pour fermer une communication entre la chambre arrière et l'extérieur du servomoteur. Selon l'invention, le deuxième clapet étant pourvu d'une butée destinée à limiter sa course d'accompagnement du plongeur, et un ressort tendant à écarter l'un de l'autre les premier et deuxième clapets. Les sièges et clapets sont disposés de telle façon que, en fonctionnement, le premier clapet ferme la communication entre les chambres avant et arrière avant que le deuxième clapet n'ouvre la communication entre la chambre arrière et l'extérieur du servomoteur.

De préférence, la butée vient en fonctionnement en appui sur une contre-butée prévue à l'extrémité d'une douille fixe par rapport au piston en fonctionnement pour limiter sa course.

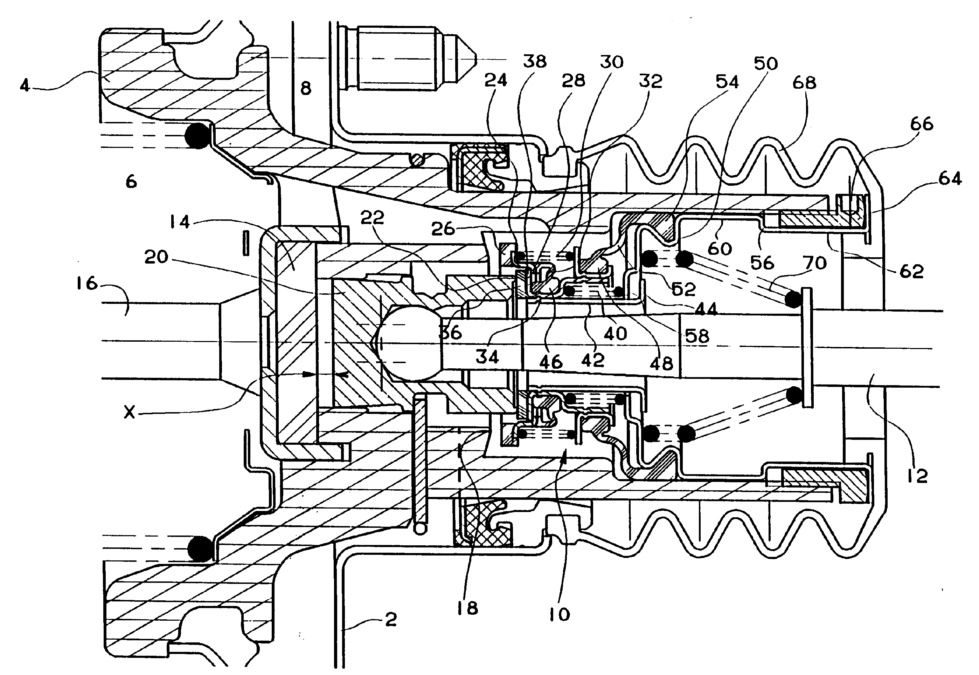

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence au dessin annexé sur lequel :

La figure unique représente en coupe une partie d'un servomoteur d'assistance au freinage prévu pour être placé de façon habituelle entre la pédale de frein d'un véhicule et le maître-cylindre commandant le circuit de freinage, avec un moyen de valve modifié suivant l'invention.

Sur cette figure, le servomoteur comporte une enveloppe 2 à l'intérieur de laquelle se trouve un piston 4 qui à l'aide d'une membrane définit une chambre avant 6 reliée en permanence à une source de dépression, et une chambre arrière 8. Un moyen de valve 10, établit entre les deux chambres une différence de pression, lors de l'actionnement d'une tige de commande 12, pour déplacer le piston 4, et par l'intermédiaire d'un disque de réaction 14, une tige de poussée 16 vers l'avant de façon à actionner un maître-cylindre (non représenté).

Le moyen de valve 10 comporte un premier siège de clapet 18 faisant partie du piston 4, un plongeur 20 comprenant un deuxième siège de clapet 22, et un ensemble de deux clapets distincts.

Un premier clapet 24 comporte une portée élastique d'étanchéité 26, une partie rigide formant butée 28 et servant également de premier appui pour un ressort 30 poussant le clapet vers l'avant, et une partie souple 32 assurant l'étanchéité entre le premier clapet 24 et un deuxième clapet 34.

Le deuxième clapet comporte une portée élastique d'étanchéité 36, une partie rigide comprenant une contre-butée 38, un deuxième appui pour le ressort 30, un premier appui pour un ressort 40 poussant le clapet 34 vers l'avant, une partie cylindrique 42 se terminant par une butée 44, et emprisonnant deux bourrelets 46 et 48 assurant la liaison respectivement avec le premier clapet 24 et avec une autre partie 50 du moyen de valve 10.

Cette autre partie 50 comporte un voile souple 52 assurant la jonction avec le deuxième clapet 34, un bourrelet d'accrochage 54 retenu dans une douille rigide 56 se terminant à son extrémité tournée vers l'avant par une contre-butée 58 servant de deuxième appui pour le ressort 40, cette douille coulissant dans le piston 4 par une partie cylindrique 60, et se terminant à son extrémité tournée vers l'arrière par une section rétreinte 62 emprisonnant un anneau fileté 64.

Au moins un trou 66 est ménagé dans l'anneau 64 pour permettre sa rotation et son vissage dans le piston 4, à l'aide de l'outil correspondant.

La partie arrière du piston 4 ainsi que l'anneau fileté 64 sont recouverts par un capuchon 68 dont la partie avant est fixée à l'enveloppe 2. Un ressort 70 placé entre la tige de commande 12 et la douille 56, pousse cette dernière vers l'avant, en butée sur l'anneau fileté 64.

Le fonctionnement du servomoteur est le suivant :

Quand la tige de commande 12 est actionnée, le plongeur 20 avance suivi du premier clapet 24 et du deuxième clapet 34, poussés par les ressorts 30 et 40 respectivement.

Au cours de ce mouvement, le premier clapet 24 vient en appui par sa portée 26 sur le premier siège de clapet 18 et isole les chambres 6 et 8 l'une de l'autre.

La chambre 8 est donc isolée de la dépression, ainsi que de l'atmosphère par la portée 36 du deuxième clapet 34 en appui sur le deuxième siège de clapet 22 du plongeur 20.

Le plongeur continuant à avancer est suivi du deuxième clapet 34 jusqu'au moment où ce dernier est arrêté par l'appui de sa butée 44 sur la contre-butée 58 de la douille 56. Pour que ce dernier mouvement du deuxième clapet 34 soit possible, le ressort 40 est taré d'une manière suffisante pour pouvoir comprimer le ressort 30.

Une légère avance supplémentaire du plongeur 20 le décolle du deuxième clapet 34 et permet le début d'admission d'air dans la chambre 8. Il y a donc à ce moment début d'assistance et le "saut" en résultant est déterminé par le jeu X existant alors entre la face avant du plongeur 20 et le disque de réaction 14.

Le "saut" est par conséquent fonction de la position de la contre-butée 58 de la douille 56, qui conditionne la position du deuxième clapet 34 quand le plongeur 20 le quitte.

La douille 56 étant toujours en butée sur l'anneau fileté 64 grâce au ressort 70, il suffit de tourner l'anneau par le ou les trous 66 après avoir décroché et déplacé le capuchon 68 pour déplacer axialement la douille 56 jusqu'à l'obtention du "saut" désiré.

On a bien ainsi, par un réglage extérieur au servomoteur, satisfait au but visé, soit à obtenir un saut de la valeur désirée.

Bien entendu, l'invention n'est pas limitée au mode de réalisation qui vient d'être décrit à titre d'exemple, mais en couvre toutes les variantes. Ainsi on comprendra que l'invention s'applique à tous les servomoteurs d'assistance au freinage quelle que soit leur structure particulière.

De même les premier et deuxième clapets 24, 34 et la partie 50 peuvent être en ce qui concerne les parties non rigides une seule et même pièce.

De même la contre-butée 58 peut être fixe par rapport au piston 4, la partie cylindrique 42 étant réalisée en deux parties télescopiques permettant d'ajuster sa longueur.

## Revendications

1. Servomoteur d'assistance au freinage du type à dépression comportant une enveloppe (2) à l'intérieur de laquelle se trouve un piston (4) qui, à l'aide d'une membrane, définit une chambre avant (6) reliée en permanence à une source de dépression et une chambre arrière (8) reliée à ladite source de dépression au repos, un moyen de valve établissant entre les deux chambres une différence de pression lors de l'actionnement de la tige de commande (12) susceptible de s'appuyer, par l'intermédiaire d'un plongeur (20), sur l'une des faces d'un disque de réaction solidaire d'une tige de poussée (16) destinée à actionner un maître-cylindre, ledit moyen de valve comprenant d'une part un premier clapet (24) destiné à venir en appui sur un premier siège de clapet (18) solidaire dudit piston (4) et déterminant au repos une communication entre lesdites chambres avant et arrière, et d'autre part un deuxième clapet (34) en appui au repos sur un deuxième siège (22) de clapet solidaire dudit plongeur (20) pour fermer une communication entre la chambre arrière et l'extérieur dudit servomoteur, ledit premier clapet fermant en fonctionnement la communication entre lesdites chambres avant et arrière avant que ledit deuxième clapet n'ouvre une communication entre la chambre arrière et l'extérieur du servomoteur, caractérisé en ce que ledit deuxième clapet est pourvu d'une butée (44) destinée à limiter sa course d'accompagnement dudit plongeur, et en ce qu'un ressort (30) tend à écarter l'un de l'autre lesdits premier et deuxième clapets.

2. Servomoteur suivant la revendication 1 caractérisé en ce que ladite butée (44) vient en fonctionnement en appui sur une contre-butée (58) prévue à l'extrémité d'une douille (56) fixe par rapport audit piston (4) en fonctionnement, pour limiter ladite course.

3. Servomoteur suivant la revendication 2 caractérisé en ce que ladite douille est montée sur un anneau fileté (64) vissé dans le piston de manière à permettre un ajustement de ladite course.

4. Servomoteur suivant la revendication 1 caractérisé en ce que la butée (44) est solidaire du deuxième clapet (34) au moyen d'un manchon cylindrique (42) de longueur ajustable.

5. Servomoteur selon la revendication 4 caractérisé en ce que le manchon est en deux parties télescopiques.

6. Servomoteur selon l'une quelconque des revendications 2 à 5 caractérisé en ce que lesdits ajustements sont effectués de l'extérieur du servomoteur.

## Patentansprüche

1. Unterdruckbremskraftverstärker mit einem Gehäuse (2), in dessen Inneren sich ein Kolben (4) befindet, der mit einer Membran eine vordere, permanent mit einer Unterdruckquelle verbundene Kammer (6) und eine hintere, im Ruhezustand mit der Unterdruckquelle verbundene Kammer (8) definiert, einem Ventilmittel, das zwischen den beiden Kammern einen Druckunterschied bei der Betätigung der Steuerstange (12) ausbildet, die sich über einen Tauchkolben (20) an einer der Seiten einer Reaktionsscheibe abstützen kann, die fest mit einer Schubstange (16) zum Betätigen eines Hauptzylinders verbunden ist, wobei das Ventilmittel zum einen ein erstes Ventilelement (24) enthält, das dazu vergesehen ist, an einem ersten, fest mit dem Kolben (4) verbundenen Ventilelementsitz (18) in Anlage zu kommen, und das in der Ruhestellung eine Verbindung zwischen der vorderen und der hinteren Kammer bestimmt, und zum anderen ein zweites Ventilelement (34), das dazu vorgesehen ist, in der Ruhestellung an einem zweiten, fest mit dem Tauchkolben (20) verbundenen Ventilelementsitz (22) in Anlage zu kommen, um eine Verbindung zwischen der hinteren Kammer und dem Äußeren des Bremskraftverstärkers zu schließen, wobei das erste Ventilelement bei einer Betätigung die Verbindung zwischen der vorderen und der hinteren Kammer schließt, bevor das zweite Ventilelement eine Verbindung zwischen der hinteren Kammer und dem Äußeren des Bremskraftverstärkers öffnet, **dadurch gekennzeichnet,** daß das zweite Ventilelement mit einem Anschlag (44) versehen ist, der seinen Mitbewegungsweg mit dem Tauchkolben begrenzt, und daß eine Feder (30) versucht, das erste und das zweite Ventilelement voneinander zu entfernen.

2. Bremskraftverstärker nach Anspruch 1, **dadurch gekennzeichnet,** daß zur Begrenzung des Bewegungsweges bei einer Betätigung der Anschlag (44) in Anlage an einen Gegenanschlag (58) kommt, der am Ende einer Buchse (56) vorgesehen ist, die bei einer Betätigung bezüglich des Kolbens (4) feststeht.

3. Bremskraftverstärker nach Anspruch 2, **dadurch gekennzeichnet,** daß die Buchse auf einem Gewindering (64) angebracht ist, der in den Kolben eingeschraubt ist, um eine Einstellung des Weges zu erlauben.

4. Bremskraftverstärker nach Anspruch 1, **dadurch gekennzeichnet,** daß der Anschlag (44) mit dem zweiten Ventilelement (34) durch eine zylindrische Muffe (42) mit einstellbarer Länge fest verbunden ist.

5. Bremskraftverstärker nach Anspruch 4, **dadurch gekennzeichnet,** daß die Muffe aus zwei teleskopischen Teilen besteht.

6. Bremskraftverstärker nach einem der Ansprüche 2 bis 5, **dadurch gekennzeichnet**, daß die Einstellungen von außerhalb des Bremskraftverstärkers bewirkt werden.

## Claims

1. Brake booster of the vacuum type, comprising a casing (2), within which is located a piston (4) which, by means of a diaphragm, defines a front chamber (6) connected permanently to a vacuum source and a rear chamber (8) connected to the said vacuum source at rest, a valve means establishing a pressure difference between the two chambers during the actuation of the control rod (12) capable, by means of a plunger (20), of bearing on one of the faces of a reaction disk integral with a push rod (16) intended for actuating a master cylinder, said valve means comprising, on the one hand, a first shutter (24) intended for coming to bear on a first shutter seat (18) integral with said piston (4) and determining, at rest, communication between said front and rear chambers, and, on the other hand, a second shutter (34) bearing, at rest, on a second shutter seat (22) integral with said plunger (20), in order to close communication between the rear chamber and the outside of said booster, said first shutter closing, during operation communication between said front and rear chambers before said second shutter opens communication between the rear chamber and the outside of the booster characterized in that said second shutter is equipped with a stop (44) intended for limiting its stroke accompanying said plunger, and in that a spring (30) tends to keep said first and second shutters apart from one another.

2. Booster according to claim 1, characterized in that, during operation, said stop (44) comes to bear on a counterstop (58) provided at the end of a bush (56) stationary relative to said piston (4) during operation, in order to limit said stroke.

3. Booster according to claim 2, characterized in that said bush is mounted on a threaded ring (64) screwed into the piston so as to allow an adjustment of said stroke.

4. Booster according to claim 1, characterized in that the stop (44) is made integral with the second shutter (34) by means of a cylindrical sleeve (42) of adjustable length.

5. Booster according to claim 4, characterized in that the sleeve is in two telescopic parts.

6. Booster according to any one of claims 2 to 5, characterized in that said adjustments are made from outside the booster.
